# EUROPÄISCHE PATENTSCHRIFT

(11) **EP 4 560 158 B1**
(45) Veröffentlichungstag und Bekanntmachung des Hinweises auf die Patenterteilung: **03.06.2026**
(21) Anmeldenummer: 23211677.2
(22) Anmeldetag: 23.11.2023
(51) Int. Cl.: F16C 11/06, F16C 41/00, G01B 7/00

(54) **SPHÄRISCHES GELENKLAGER FÜR EIN GELENKFAHRZEUG, GELENKFAHRZEUG UND VERFAHREN ZUM BETREIBEN EINES GELENKFAHRZEUGS**
SPHERICAL JOINT BEARING FOR AN ARTICULATED VEHICLE, ARTICULATED VEHICLE AND METHOD FOR OPERATING AN ARTICULATED VEHICLE
PALIER SPHÉRIQUE ARTICULÉ POUR VÉHICULE ARTICULÉ, VÉHICULE ARTICULÉ ET PROCÉDÉ DE FONCTIONNEMENT D'UN VÉHICULE ARTICULÉ

(43) Veröffentlichungstag der Anmeldung: 28.05.2025
(73) Patentinhaber: Browne, Denis, 22946 Trittau (DE)
(72) Erfinder: BROWNE, Denis, 22946 Trittau (DE)
(74) Vertreter: Seemann & Partner Patentanwälte mbB

(56) Entgegenhaltungen:
- US-A1- 2018 031 446

## Beschreibung

Die Erfindung betrifft ein sphärisches Gelenklager für ein Gelenkfahrzeug, ein Gelenkfahrzeug und Verfahren zum Betreiben eines Gelenkfahrzeugs.

Gelenkfahrzeuge mit sphärischen Gelenklagern zur Verbindung von miteinander angelenkt verbundenen Teilen sind in Form von Gelenkbussen oder schienengebundenen Fahrzeugen wie Straßenbahnen, Trams o.ä. bekannt. Solchen Gelenkfahrzeugen oder Gliederfahrzeugen ist gemeinsam, dass sie aus mehreren gelenkig verbundenen, betrieblich nicht trennbaren Teilen bzw. Abschnitten bestehen, zwischen denen ein Durchgang während der Fahrt möglich ist.

Sphärische Gelenklager verbinden die Teile der Gelenkfahrzeuge so, dass sie sowohl kurvengängig sind als auch in begrenztem Umfang Verschwenkungen um eine Längsachse und eine horizontale Querachse des Gelenksfahrzeugs ermöglichen, also Dreh-, Nick- und Wankbewegungen. Die beiden Fahrzeugteile sind mit einem unteren Lagergehäuse bzw. mit einem oberen Lagergehäuse des sphärischen Gelenklagers verbunden, wobei diese beiden Lagergehäuse in den für das Lager relevanten Teilen sphärisch mit konzentrischen inneren und äußeren sphärischen Lagerflächen aufgebaut sind und sich um einen gemeinsamen Mittelpunkt gegeneinander verdrehen können. Die Lagergehäuse werden über Schraub- bzw. Schraubbolzenverbindungen mit den Fahrzeugteilen verbunden.

Die Amplitude der mit solchen sphärischen Gelenklagern möglichen Dreh-, Nick- und Wankbewegungen wird zum einen vom Gelenklager selbst, stärker aber von den Abmessungen der daran befestigten Gelenkfahrzeugteile begrenzt, also beispielsweise den Gelenkbusabschnitten oder Tramwagen. Während Drehbewegungen (Kurven) im eingebauten Zustand des sphärischen Gelenklagers typischerweise relative Winkel zwischen den Längsachsen der Fahrzeugteile von bis zu 20° bis 30° erlauben, sind die Nick- und Wankbewegungen auf kleinere Winkel begrenzt, beispielsweise bis zu ±5°. Insofern handelt es sich bei den oberen und unteren Lagergehäusen auch nicht um eigentlich kugelförmige Werkstücke, auch wenn das obere Lagergehäuse im Englischen beispielsweise als "outer ball" bezeichnet wird, sondern um Werkstücke mit abschnittsweise konvexen bzw. konkaven aufeinander aufliegenden sphärischen Lagerflächen, deren Radien aufeinander angepasst gewählt sind, um eine großflächige Verteilung der auf die Lagerflächen wirkenden Kräfte zu erreichen und punktuelle Druckspitzen zu vermeiden.

Um zu verhindern, dass das obere Lagergehäuse ("outer ball") mit seiner nach unten gerichteten konvexen sphärischen Lagerfläche nach oben aus dem unteren Lagergehäuse mit seiner nach oben gerichteten konkaven sphärischen Lagerfläche herausgehebelt wird, weist das untere Lagergehäuse im Zentrum seiner sphärischen Lagerfläche eine vertikal nach oben gerichtete Säule auf, auf deren oberen Ende eine Abhebesicherung montiert und fixiert wird, die an ihrer Unterseite wiederum eine sphärische Lagerfläche aufweist und im Englischen als "inner ball" bezeichnet wird. Diese Abhebesicherung wirkt in der Art eines Deckels mit einer nach oben gerichteten sphärischen Lagerfläche des oberen Lagergehäuses zusammen und überragt eine zentrale Öffnung des oberen Lagergehäuses in radialer Richtung. Im normalen Betrieb drückt das Gewicht des mit dem oberen Lagergehäuse verbundenen Fahrzeugteils das obere Lagergehäuse auf die Lagerfläche des unteren Lagergehäuses und es besteht kein Kontakt zwischen dem oberen Lagergehäuse und der Abhebesicherung. Ein solcher Kontakt kommt nur zustande, wenn in einer Nickbewegung des Gelenkfahrzeugs das obere Lagergehäuse nach oben gezogen wird und die untere, eigentliche sphärische Lagerfläche verlässt. Auch die Abhebesicherung muss in solchen Fällen starken Kräften widerstehen können.

Gelenkfahrzeuge sind üblicherweise schwere Fahrzeuge, sodass die Gelenklager hohen Belastungen standhalten müssen. Die Gelenklager bestehen daher zu großen Teilen aus korrosionsbeständigem Stahl mit hoher Festigkeit. Um ein möglichst widerstandsarmes Gleiten zu ermöglichen, wird eine untere sphärische Lagerfläche jedoch durch einen Kunststoffliner gebildet, der mit Stahl einen geringen Gleitwiderstand bildet. Ein solcher Kunststoffliner weist eine geringere Festigkeit auf als der Stahl, der im Rest des Gelenklagers eingesetzt wird und unterliegt daher wesentlich höherem Verschleiß. Ist ein solcher Kunststoffliner verschlissen, dann klappert das Lager und die Fahrsicherheit verschlechtert sich. Eine Überprüfung des Verschleißes im Rahmen von regelmäßigen Wartungsarbeiten ist daher notwendig. Verschleißmessungen des Gelenklagers sind allerdings sehr aufwendig und akkurate Messungen nur an ausgebauten Gelenklagern möglich.

Bei Überlastungen, wie beispielsweise bei einem Unfall, werden die beiden Lagergehäuse stark punktuell gegeneinandergedrückt, wodurch der Kunststoffliner beschädigt werden kann. Außerdem kann bei starker Belastung auch eine Schraubverbindung einer Abhebesicherung beschädigt werden, mit der das obere Lagergehäuse von oben gegenüber dem unteren Lagergehäuse gesichert wird.

Aus US 2018/031446 A1 ist ein sphärisches Gelenklager bekannt, dessen Liner zwei Verschleißsensoren aufweist. Diese weisen jeweils zwei Kontakte auf, die über eine metallische Lagerfläche miteinander in elektrischen Kontakt kommen, wenn der Liner verschlissen ist.

Hiervon ausgehend ist es eine Aufgabe der vorliegenden Erfindung, den Betrieb von Gelenkfahrzeugen mit sphärischen Gelenklagern mit weniger Aufwand sicherer zu gestalten als bisher.

Diese Aufgabe wird durch ein sphärisches Gelenklager für ein Gelenkfahrzeug gelöst, das ein mit einem ersten Gelenkfahrzeugabschnitt verbindbares unteres Lagergehäuse mit einer zentralen vertikalen Säule, einen im unteren Lagergehäuse um die Säule herum angeordneten ringförmigen Kunststoffliner, der eine nach oben offene erste sphärische Lagerfläche definiert, ein mit einem zweiten Gelenkfahrzeugabschnitt verbindbares ringförmiges sphärisches oberes Lagergehäuse, das auf der ersten sphärischen Lagerfläche gleitend lagert, sowie eine Abhebesicherung mit einer zweiten sphärischen Lagerfläche umfasst, die an einer zentralen Säule des Lagergehäuses befestigbar ist und das obere Lagergehäuse vor einem Abheben sichert, wobei in den Kunststoffliner wenigstens ein Verschleißsensor integriert ist, der in einem Neuzustand des Kunststoffliners einen vordefinierten Abstand zur ersten sphärischen Lagerfläche des Kunststoffliners aufweist, wobei das Gelenklager dadurch weitergebildet ist, dass die Abhebesicherung und/oder eine oder mehrere Befestigungsschrauben, mit denen die Abhebesicherung auf der zentralen Säule des unteren Lagergehäuses befestigt sind, mit wenigstens einem Sensor ausgestattet ist oder sind.

Der vordefinierte Abstand definiert eine Verschleißgrenze, bei deren Unterschreitung der Kunststoffliner ersetzt werden muss. Dadurch, dass das Erreichen der Verschleißgrenze mittels eines oder mehrerer Verschleißsensoren automatisch erfasst wird, ist es nicht mehr notwendig, bei jeder Wartung das Gelenklager in aufwändiger und langwieriger Arbeit auseinanderzunehmen, sondern es genügt, dies dann zu tun, wenn der Kunststoffliner laut Sensorsignal tatsächlich verschlissen ist und ein Austausch notwendig geworden ist. Auch die aufwändige akkurate Messung des Verschleißes während der regelmäßigen Wartung kann entfallen. Ebenfalls wird sofort angezeigt, falls durch eine übermäßige Belastung wie beispielsweise einen Unfall der Kunststoffliner beschädigt worden ist und ausgetauscht werden muss. Dadurch wird der Betrieb des Gelenksfahrzeugs mit dem sphärischen Gelenklager sicherer und gleichzeitig weniger aufwendig.

Das Prinzip von Verschleißsensoren ist von Fahrzeugbremsen, insbesondere Scheibenbremsen, bekannt, in denen Verschleißsensoren in die Bremsbeläge integriert sind. Die Einsatzbedingungen in Bremsbelägen unterscheiden sich jedoch grundsätzlich von denen in sphärischen Gelenklagern von Gelenkfahrzeugen. In Gelenklagern herrscht eine anhaltende und dauerhafte Druckbelastung bei äußerst geringer Relativgeschwindigkeit der gegeneinander beweglichen Lagerteile vor. Im Gegensatz dazu werden die Bremsen von Kraftfahrzeugen immer nur kurzzeitig eingesetzt, wobei aufgrund der großen Relativgeschwindigkeit zwischen Bremsscheibe und Bremsbacken und der großen eingesetzten Bremskraft ein starker Verschleiß der Bremsbacken eintritt, während die kinetische Energie des Fahrzeugs in thermische Energie der Bremsscheibe umgesetzt wird. Vor allem aufgrund der vorhandenen abrasiven Wirkung der sich gegenüber den Bremsbacken schnell drehenden Bremsscheiben sind die Verschleißsensoren an Fahrzeugbremsen typischerweise als elektrisch leitende Schlaufen ausgelegt, die um eine Verschleißgrenze nach innen in den Bremsbelag versetzt angeordnet sind und beim Erreichen der Verschleißgrenze sehr schnell durch die schnell rotierende Bremsscheibe gekappt werden, sodass die elektrische Leitung darin unterbrochen wird, sobald die Bremse nicht mehr betätigt wird und die Bremsbacken sich von der Bremsscheibe lösen. Der plötzliche Verlust der Leitfähigkeit des Sensors gibt das Signal für das Erreichen der Verschleißgrenze des Bremsbelags.

In sphärischen Gelenklagern würde dies nicht in gleicher Weise funktionieren, weil die schnelle Relativbewegung zwischen den Lagerteilen fehlt, mit denen eine Drahtschlaufe schnell und sicher gekappt werden kann. In Ausführungsformen kann der Verschleißsensor daher als voneinander isoliertes Paar von Drähten ausgebildet sein, die bei Kontakt mit einer elektrisch leitfähigen Oberfläche des oberen Lagergehäuses einen elektrischen Kontakt bilden. Solange das Drahtpaar im Kunststoffliner eingebettet oder integriert ist, sind sie voneinander isoliert, während der Kontakt mit der metallischen sphärischen Lagerfläche des oberen Lagergehäuses den elektrischen Kontakt herstellt. Um sicherzustellen, dass der Kontakt dann auch dauerhaft besteht, kann ein solcher Verschleißsensor an einer Stelle in den Kunststoffliner eingelassen sein, die in jeder im Betrieb vorkommenden Relativposition zwischen unterem und oberem Lagergehäuse in Kontakt mit dem oberen Lagergehäuse bleibt. Alternativ kann in einer Fahrzeugsteuereinheit auch vorgesehen sein, dass ein Register, beispielsweise ein Speicherplatz oder eine Flag, mit dem der Verschleißsensor überwacht wird, beim erstmaligen Herstellen des Kontakts am Verschleißsensor auf einen Zustand geschaltet wird, der einen Verschleiß des Kunststoffliners anzeigt und das Register erst wieder nach einer Wartung oder einem Austausch des Kunststoffliners wieder zurückgesetzt werden kann.

Umgekehrt ist in Ausführungsformen vorgesehen, dass der Verschleißsensor als Drahtschlaufe mit durchgehender elektrischer Leitung ausgebildet ist, wobei bei auftretendem Verschleiß des Kunststoffliners die Drahtschlaufe mittels eines mechanisch durch das obere Lagergehäuse angepressten Unterbrechungsmittel unterbrochen, insbesondere mittels einer scharfen Kante des Unterbrechungsmittels gekappt oder an einer Sollbruchstelle gebrochen, wird. Mit einem solchen druckbeaufschlagten Unterbrechungsmittel wird das Problem umgangen, dass es im Gegensatz zu Fahrzeugbremsen an einer stark abrasiven Wirkung von Bremsscheiben fehlt, die ansonsten in ihrer schnellen Drehbewegung die Drahtschlaufe beim Bremsen zwangsläufig kappen würden.

Eine Umsetzung einer solchen Lösung kann so erfolgen, dass ein Abschnitt der Drahtschlaufe, der gegebenenfalls im Sinne einer Sollbruchstelle mit einem geringeren Durchmesser des Drahtes ausgestaltet ist als der Rest der Drahtschlaufe, mit mechanischen Haltern, Klemmen auf einer geeigneten Vorspannung gehalten wird oder auf einer Oberfläche eines unnachgiebigen ebenfalls im Kunststoffliner eingebettenen Köpers aufliegt, und ein zweiter unnachgiebiger Körper mit seiner Rückseite an der Verschleißgrenze im Kunststoffliner eingebettet ist und mit einer Kante den Abschnitt der Drahtschlaufe kontaktiert. Sobald durch Erreichen der Verschleißgrenze ein Druck vom oberen Lagergehäuse auf die Rückseite des zweiten unnachgiebigen Körpers ausgeübt wird, wird dieser mit seiner Kante auf den entsprechenden vorbereiteten Abschnitt gedrückt und sorgt so dafür, dass der Draht in diesem Abschnitt reißt und auf diese Weise ein Verschleißsignal erzeugt.

Die Drähte des Verschleißsensors können in Ausführungsformen vertikal, horizontal, radial und/oder mit einem Knick an die erste sphärische Lagerfläche des Kunststoffliners herangeführt sein. Die Herstellung kann so erfolgen, dass der Kunststoffliner zunächst gegossen oder gefräst wird und anschließend eine oder mehrere Bohrungen eingefügt werden, in den oder die die einen oder mehreren Verschleißsensoren eingeführt werden. Die Bohrungen können gegebenenfalls anschließend noch verfüllt werden, um die einen oder mehreren Verschleißsensoren zu fixieren. Alternativ kann oder können der oder die Verschleißsensoren auch bereits beim Gießen des Kunststoffliners in der Form vorhanden sein und direkt mit eingegossen werden. Dies ermöglicht auch andere Formgebungen für die Verschleißsensoren, beispielsweise mit Kurven oder Knicken in der Führung der Drähte. Außerdem hat dies den Vorteil, dass die Verschleißsensoren im Kunststoffliner nicht verrutschen können.

Mehrere Verschleißsensoren können in Ausführungsformen in Umfangsrichtung des Kunststoffliners verteilt angeordnet sein. Auf diese Weise ist es möglich, den Verschleiß des Kunststoffliners auch in weniger beanspruchten Bereichen des Gelenklagers zu überwachen, etwa in den hinteren seitlichen Bereichen, die aber gegebenenfalls bei Unfällen oder anderen außergewöhnlichen Fahrzuständen in Mitleidenschaft gezogen werden können.

Erfindungsgemäß ist oder sind die Abhebesicherung und/oder eine oder mehrere Befestigungsschrauben, mit denen die Abhebesicherung auf der zentralen Säule des unteren Lagergehäuses befestigt sind, mit wenigstens einem Sensor ausgestattet. Der wenigstens eine Sensor kann in Ausführungsführen als Schraubensensor, insbesondere mit piezoelektrischen Messelementen, als Drucksensor in Form einer Unterlegscheibe, als Dehnungsmessstreifen, als Verdrehsensor oder als Bruchsensor, insbesondere als unterbrechbarer Stromkreis, ausgestaltet sein. Diese Arten von als oder mit Schrauben verwendbaren Sensoren sind bekannt und vermelden auf verschiedene direkte oder indirekte Weisen, wenn die Schraube ihre Spannkraft verliert. Dies erfolgt bei der Abhebesicherung des sphärischen Gelenklagers vor allem bei starken Belastungen, die dadurch entstehen, dass das obere Lagergehäuse mit einer die Spezifikationen des Gelenklagers übersteigenden Kraft vom unteren Lagergehäuse abgehoben wird, etwa im Falle einer Notbremsung oder eines Unfalls.

So werden beispielsweise Drucksensoren, die als Unterlegscheibe angewendet werden, in einem solchen Fall einen kurzen Druckanstieg verzeichnen, gefolgt von einem rapiden Druckabfall, wenn die überwachte Schraube gebrochen ist und somit keine Zugkraft mehr entfaltet. Ein Verdrehsensor überwacht, ob sich die Schraube in ihrem Bohrgewindeloch durch ein Verdrehen lockert, betrifft also eine eher schleichende Art der Lockerung der Schraubverbindung, während Dehnungsmessstreifen oder Bruchsensoren wiederum die Funktionstüchtigkeit der Schraube direkt überwachen.

Die der Erfindung zugrundeliegende Aufgabe wird auch durch ein Gelenkfahrzeug mit einem hierüber beschriebenen erfindungsgemäßen sphärischen Gelenklager sowie einer Steuereinheit gelöst, die mit dem wenigstens einen Verschleißsensor und/oder mit dem wenigstens einen Sensor an der Abhebesicherung oder einer Schraube der Abhebesicherung, verbunden ist. Ein solches Gelenkfahrzeug implementiert mit dem erfindungsgemäßen Gelenklager die gleichen Vorteile, Eigenschaften und Merkmale wie das Gelenklager.

Ferner wird die der Erfindung zugrundeliegende Aufgabe auch durch ein Verfahren zum Betreiben eines zuvor beschriebenen Gelenkfahrzeugs mit einem zuvor beschriebenen erfindungsgemäßen sphärischen Gelenklager gelöst, bei dem mittels der Steuereinheit überwacht wird, ob ein Verschleißsensor einen Verschleiß des Kunststoffliners und/oder ein Sensor an der Abhebesicherung oder einer Schraube der Abhebesicherung eine Lockerung der Abhebesicherung anzeigt. Auch das Verfahren verwirklicht die gleichen Vorteile, Eigenschaften und Merkmale wie die anderen Erfindungsgegenstände.

In Ausführungsformen erzeugt die Steuereinheit im Falle einer durch ein Signal eines Verschleißsensors oder eines Sensors an einer Schraube der Abhebesicherung angezeigten Beschädigung des Gelenklagers eine Meldung über die Beschädigung des Gelenklagers und zeigt diese Meldung einem Fahrzeugführer an, speichert sie zum späteren Auslesen und/oder übermittelt sie einem externen Computer, insbesondere einem Computer eines Wartungssystems für das Gelenkfahrzeug.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung eines Querschnitts durch ein sphärisches Gelenklager für ein Gelenkfahrzeug,
- Fig. 2: eine schematische Explosionsdarstellung des Gelenklagers der Fig. 1,
- Fig. 3: eine schematische Draufsicht auf die Oberseite des Gelenklagers der Fig. 1,
- Fig. 4: eine schematische Darstellung eines zwischen zwei Teilen eines Gelenkfahrzeugs angeordneten sphärischen Gelenklagers und
- Fig. 5: eine schematische Darstellung eines Ausführungsbeispiels eines Gelenklagers eines Gelenkfahrzeugs.

In den Zeichnungen sind jeweils gleiche oder gleichartige Elemente und/oder Teile mit denselben Bezugsziffern versehen, so dass von einer erneuten Vorstellung jeweils abgesehen wird.

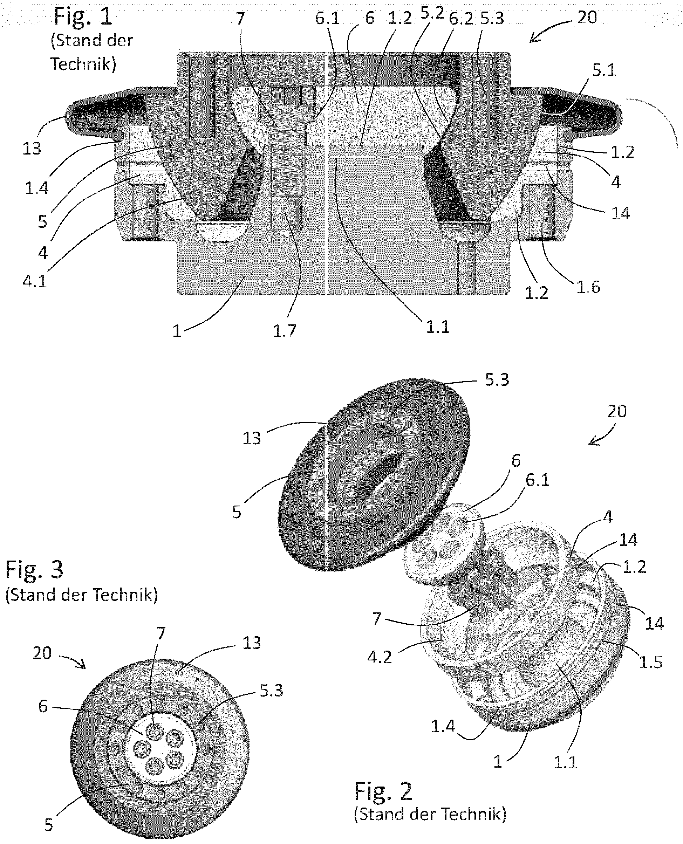

Fig. 1 zeigt eine schematische Darstellung eines Querschnitts durch ein bekanntes sphärisches Gelenklager 20 für ein Gelenkfahrzeug, wie beispielsweise einen Gelenkbus oder eine Trambahn. Das Gelenklager 20 umfasst ein unteres Lagergehäuse 1, das um eine zentrale vertikale Achse (ohne Darstellung) herum im Wesentlichen rotationssymmetrisch ausgebildet ist. Das untere Lagergehäuse 1 ist mittels mehrerer Schraub- bzw. Sacklöcher 1.6 mit Innengewinde zur Verbindung mit einem ersten Fahrzeugteil eines Gelenkfahrzeugs eingerichtet. Ferner weist das untere Lagergehäuse 1 eine zentrale vertikal ausgerichtete Säule 1.1 und einen um die zentrale Säule 1.1 umlaufend angeordneten Sitz 1.2 auf. Ein ringförmiger Kunststoffliner 4 ist mit seiner Außenseite und Unterseite im umlaufend angeordneten Sitz 1.2 des unteren Lagergehäuses 1 aufgenommen und definiert an einer nach oben und innen weisenden Fläche eine erste sphärische Lagerfläche 4.1. Der Kunststoffliner 4 kann beispielsweise durch Kraftschluss im unteren Lagergehäuse 1 fixiert sein. Alternativ kann der Kunststoffliner 4 auch verklebt oder verschraubt sein.

Ein ringförmiges oberes Lagergehäuse 5 ist mittels weiteren Schraub- bzw. Sacklöchern 5.3 mit Innengewinde zur Verbindung mit einem zweiten Fahrzeugteil eines Gelenkfahrzeugs eingerichtet. Das obere Lagergehäuse 5 ist mit einem nach außen und unten weisenden ersten sphärischen Abschnitt 5.1 einer Außenfläche gleitend auf der ersten sphärischen Lagerfläche 4.1 gelagert. Da der Radius des ersten sphärischen Abschnitts 5.1 des oberen Lagergehäuses 5 an den Radius der ersten sphärischen Lagerfläche 4.1 des Kunststoffliners 4 angepasst ist, insbesondere diesem entspricht, liegt das obere Lagergehäuse 5 großflächig auf der ersten sphärischen Lagerfläche 4.1 des Kunststoffliners 4 auf. So werden schädliche punktuelle Druckspitzen vermieden.

Der Kontakt zwischen dem oberen Lagergehäuse 5 und dem Kunststoffliner 4 ist an sich reibarm. Zur weiteren Verminderung der Reibung sind eine oder mehrere radial von außen kommende durchgehende Öffnungen 14 vorgesehen, die eine Außenwandung des unteren Lagergehäuses 1 und den Kunststoffliner 4 durchdringen und durch die ein Lagerschmiermittel eingebracht werden kann, das sich durch eine umlaufende Schmiernut 4.2 über die erste sphärische Lagerfläche 4.1 verteilt. Die umlaufende Schmiernut 4.2 ist in der Explosionsdarstellung der Fig. 2 zu erkennen.

Zurück in Fig. 1 ist zu erkennen, dass sich der erste sphärische Abschnitt 5.1 des oberen Lagergehäuses 5 in der Schnittebene länger erstreckt als die erste sphärische Lagerfläche 4.1 des Kunststoffliners 4. Damit wird erreicht, dass in jeder Fahrsituation, also in jeder erlaubten Orientierung des oberen Lagergehäuses 5 relativ zum unteren Lagergehäuse 1, sich die Druckbelastung stets über die gesamte sphärische Lagerfläche 4.1 des Kunststoffliners 4 verteilt und somit keine unterschiedlichen Druckbelastungen direkt benachbarter Teile des Kunststoffliners 4 auftreten können, die zu Rissbildung im Kunststoffliner 4 führen könnten.

Gleichzeitig ist in Fig. 1 zu erkennen, dass Kipp- und Wankbewegungen des oberen Lagergehäuses 5 gegenüber dem unteren Lagergehäuse 1 dadurch begrenzt sind, dass die Unterseite des oberen Lagergehäuses 5 bei zu großer Neigung gegen die Außenfläche der zentralen Säule 1.1 des unteren Lagergehäuses 1 stößt. Hierzu sind die Außenfläche der Säule 1.1 und die Innenfläche der zentralen Öffnung des ringförmigen oberen Lagergehäuses 5 jeweils konisch ausgestaltet, wobei die Öffnungswinkel bzw. Konuswinkel aufeinander abgestimmt sein können, um einen möglichst flächigen Kontakt beim Anschlag an der zentralen Säule und somit eine möglichst großflächige Verteilung der mechanischen Belastung zu erzielen, um Schäden durch punktuelle Druckspitzen an den Lagergehäusen zu verhindern.

Nach oben hin wird das obere Lagergehäuse mittels einer Abhebesicherung 6 begrenzt, die an einer Oberfläche 1.2 der zentralen Säule 1.1 des unteren Lagergehäuses 1 befestigt ist. Die Abhebesicherung 6 überragt radial sowohl die zentrale Säule 1.1 als auch die zentrale Öffnung des oberen Lagergehäuses 5. Zur Zentrierung auf der zentralen Säule 1.1 verfügt die Abhebesicherung 6 an ihrer Unterseite über einen umlaufenden Rand, der die zentrale Säule 1.1 entlang ihres Umfangs in vertikaler Richtung nach unten überragt. Die Abhebesicherung 6 weist zusätzlich zur Befestigung auf der Oberseite der zentralen Säule 1.1 durchgehende Schraublöcher 6.1 mit Schraubkopfsitzen auf, die mit entsprechenden Schraub- bzw. Sacklöchern 1I mit Innengewinde in der Oberfläche 1.2 der zentralen Säule 1.1 fluchten. Die Befestigung erfolgt mit Befestigungsschrauben 7, die durch die Schraublöcher 6.1 in die Sacklöcher 1.7 eingeführt und verschraubt sind, wobei die Köpfe der Befestigungsschrauben 7 auf den Schraubkopfsitzen der Schraublöcher 6.1 aufliegen. Wie in den Figuren 2 und 3 zu sehen ist, erfolgt die Befestigung der Abhebesicherung 6 in diesem Beispiel mit fünf Befestigungsschrauben.

Die Abhebesicherung 6 weist an ihrer nach unten weisenden Fläche eine zweite sphärische Lagerfläche 6.2 auf, die einem zweiten sphärischen Abschnitt 5.2 des oberen Lagergehäuses 5 gegenüberliegt. Die Radien der zweiten sphärischen Lagerfläche 6.2 und des zweiten sphärischen Abschnitts 5.2 entsprechen einander, so dass unter jeglicher Neigung des Gelenklagers 20 eine großflächige Berührung und Verteilung der wirkenden Kräfte erfolgt. Außerdem sind die zweite sphärische Lagerfläche 6.2 und der zweite sphärische Abschnitt 5.2 konzentrisch zu der ersten sphärischen Lagerfläche 4.1 und dem ersten sphärischen Abschnitt 5.1.

Nach oben hin wird das Gelenklager 20 mittels einer umlaufenden Dichtlippe 13 aus Gummi oder einem anderen flexiblen Material abgedichtet, die zum einen mit einer randständigen umlaufenden Wulst in einer umlaufenden Nut 1.4 am oberen äußeren Rand der Wandung des unteren Lagergehäuses 1 befestigt ist und zum anderen auf einer umlaufenden Schulter am oberen Lagergehäuse 5 aufliegt. Die Befestigung kann hier beispielsweise durch Kraftschluss des elastischen Materials der Dichtlippe 13 mit einem zylindrischen hervorstehenden Teil des oberen Lagergehäuses 5 erfolgen, dessen Durchmesser etwas größer ist als der Durchmesser einer zentralen Öffnung der Dichtlippe 13 im entspannten Zustand, durch die der hervorstehende Teil des oberen Lagergehäuses 5 hervorsteht.

Die Figuren 2 und 3 zeigen das sphärische Gelenklager 20 in einer Explosionsdarstellung (Fig. 2) und einer Draufsicht von oben (Fig. 3). Diese Darstellungen lassen den rotationssymmetrischen Aufbau des Gelenklagers 20 und seiner Einzelteile erkennen, die in Fig. 1 im Querschnitt dargestellt sind.

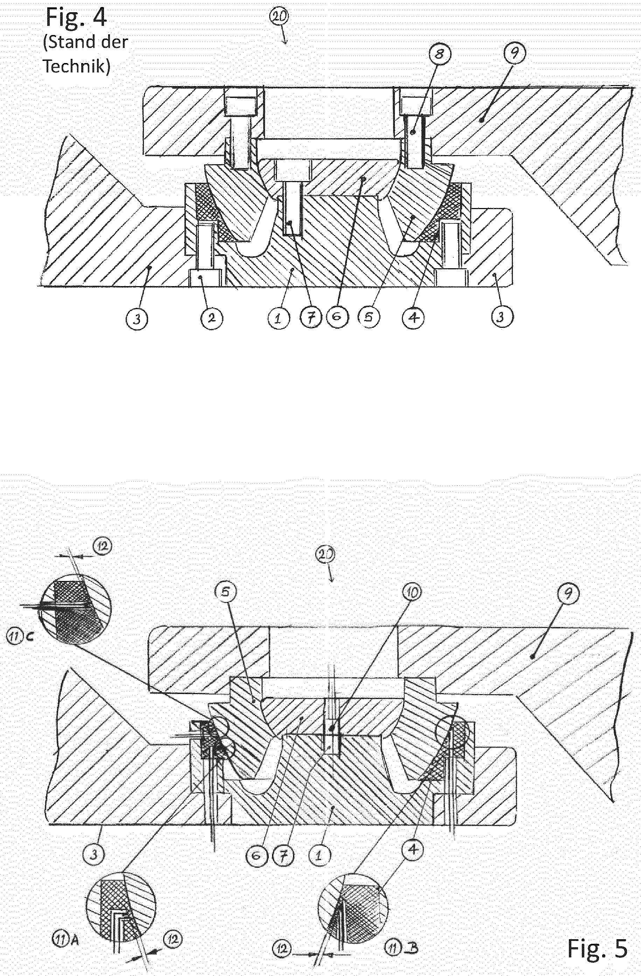

Fig. 4 zeigt ein ähnliches Beispiel eines sphärischen Gelenklagers 20, bei dem zusätzlich zu den Details, die den Fig. 1 bis 3 zu entnehmen sind, die Anordnung des Gelenklagers 20 im Gelenkfahrzeug dargestellt ist. Das sphärische Gelenklager 20 sitzt dazu mit seinem unteren Lagergehäuse 1 in einer Aufnahme eines unteren Fahrzeugrahmens 3 eines ersten Teils eines Gelenkfahrzeugs, und ist mit einer Mehrzahl von Befestigungsschrauben 2 am unteren Fahrzeugrahmen befestigt.

Ein oberer Fahrzeugrahmen 9 ist von oben mittels einer Mehrzahl von Befestigungsschrauben 8 an der Oberseite des oberen Lagergehäuses 5 befestigt, das mittels einer Abhebesicherung 6 auf einer zentralen Säule 1.1 des unteren Lagergehäuses 1 befestigt ist.

Die Fig. 5 zeigt auf der Grundlage des in Fig. 4 gezeigten sphärischen Gelenklagers 20 mehrere mögliche Umsetzungen der erfindungsgemäßen Verschleiß- und Schadmessung, die kumulativ miteinander verwirklicht werden können.

Die Abhebesicherung 6 weist hierzu einen mittig angeordneten Sensor 10 auf, der in die Oberfläche der zentralen Säule des unteren Lagergehäuses 1 hineinreicht, auf dem die Abhebesicherung 6 aufliegt und befestigt ist. Hierbei kann es sich um einen Bruchsensor handeln, der bricht, sobald die Abhebesicherung 6 von der zentralen Säule abgehoben wird. Der Sensor 10 kann auch als Dehnungsmessstreifen oder intelligente Schraube ausgeführt sein. Ferner muss der Sensor 10 nicht in der Mitte der Abhebesicherung angeordnet sein, sondern kann exzentrisch angeordnet sein, oder es können mehrere Sensoren 10 über die Fläche der Abhebesicherung 6 verteilt sein. Ferner können auch die Befestigungsschrauben 7, mit denen die Abhebesicherung 6 befestigt wird, direkt überwacht werden. Hierfür sind beispielsweise Drucksensoren in Form von Unterlegscheiben, intelligente Schrauben, Bruchsensoren, Dehnungsmessstreifen oder ähnliches einsetzbar. Sobald ein solcher Sensor 10 feststellt, dass die Abhebesicherung 6 oder eine Befestigungsschraube 7 der Abhebesicherung nicht mehr fest ist, wird ein Schaden am Gelenklager 20 festgestellt und geeignete Maßnahmen ergriffen, wie beispielsweise die Information des Fahrzeugführers oder eines Wartungssystems.

Für die Verschleißsensoren 11 zeigt Fig. 5 drei verschiedene mögliche Varianten A, B und C. Diese befinden sich jeweils im Kunststoffliner 4 und unterscheiden sich in diesen Ausführungsbeispielen vor allem durch die Kabelführung. Jede Variante wird in einem vergrößerten Ausschnitt dargestellt.

In der Variante A, dargestellt in Fig. 5 im Ausschnitt unten links, werden die Drähte des Verschleißsensors 11 von unten und unter einem Knick nach innen bis zur Verschleißgrenze 12 geführt. Die Drähte führen durch eine dafür vorgesehene vertikale Bohrung durch den Kunststoffliner 4, das untere Lagergehäuse 1 und den unteren Fahrzeugrahmen 3 hindurch, beispielsweise zu einer zentralen Steuereinrichtung oder einer mit der zentralen Steuereinrichtung verbundenen Elektronikeinheit des Sensors 11. Aufgrund des Knicks nähern sich die beiden Drähte annähernd radial an die sphärische Lagerfläche des Kunststoffliners 4 an. Wenn der Verschleiß der Oberfläche der Lagerfläche so weit fortgeschritten ist, dass die Verschleißgrenze 12 erreicht bzw. durchbrochen ist, kommen beide Drahtenden des Verschleißsensors 11 in Kontakt mit der metallischen Wand des oberen Lagergehäuses 5. Die Herstellung des elektrischen Kontakts signalisiert das Überschreiten der Verschleißgrenze.

Die Variante B, in Fig. 5 unten mittig dargestellt, unterscheidet sich von der Variante A darin, dass die von unten zugeführten Drähte des Verschleißsensors 11 nicht abknicken. Dadurch werden die beiden Enden annähernd tangential an die Lagerfläche des Kunststoffliners 4 herangeführt, wobei der durch die Verschleißgrenze 12 definierte Abstand zur Lagerfläche gewahrt bleibt. Die beiden Drähte enden daher in der Höhe zueinander versetzt. Bei Durchstoßen der Verschleißgrenze 12 werden die beiden Drähte seitlich von der sphärischen Oberfläche des oberen Lagergehäuses 5 kontaktiert und die elektrische Verbindung, die den Verschleiß signalisiert, hergestellt.

In der Variante C, in Fig. 5 oben links dargestellt, werden die Drähte des Verschleißsensors 11 von der Seite herangeführt und in der Verlängerung durch den Spalt zwischen dem unteren Fahrzeugrahmen 3 und dem oberen Fahrzeugrahmen 9 weggeführt. Wie in Variante A nähern sich die Drähte in diesem Fall annähernd radial an die Verschleißgrenze bzw. die Lagerfläche an.

### Bezugszeichenliste

- 1: unteres Lagergehäuse
- 1.1: zentrale Säule
- 1.2: Oberfläche der Säule
- 1.3: Sitz für Kunststoffliner
- 1.4: umlaufende Nut
- 1.5: umlaufende Schmiernut
- 1.6: Sackloch mit Innengewinde
- 1.7: Sackloch mit Innengewinde
- 2: Befestigungsschraube
- 3: unterer Fahrzeugrahmen
- 4: Kunststoffliner
- 4.1: erste sphärische Lagerfläche
- 4.2: umlaufende Schmiernut
- 5: oberes Lagergehäuse
- 5.1: erster sphärischer Abschnitt
- 5.2: zweiter sphärischer Abschnitt
- 5.3: Sackloch mit Innengewinde
- 6: Abhebesicherung
- 6.1: Schraubloch mit Schraubkopfsitz
- 6.2: zweite sphärische Lagerfläche
- 7: Befestigungsschraube
- 8: Befestigungsschraube
- 9: oberer Fahrzeugrahmen
- 10: Sensor
- 11: Verschleißsensor
- 12: Verschleißgrenze
- 13: Dichtlippe
- 14: Öffnung
- 20: Gelenklager

## Patentansprüche

1. Sphärisches Gelenklager (20) für ein Gelenkfahrzeug, umfassend ein mit einem ersten Gelenkfahrzeugabschnitt verbindbares unteres Lagergehäuse (1) mit einer zentralen vertikalen Säule (1.1), einen im unteren Lagergehäuse (1) um die Säule (1.1) herum angeordneten ringförmigen Kunststoffliner (4), der eine nach oben offene erste sphärische Lagerfläche (4.1) definiert, ein mit einem zweiten Gelenkfahrzeugabschnitt verbindbares ringförmiges sphärisches oberes Lagergehäuse (5), das auf der ersten sphärischen Lagerfläche (4.1) gleitend lagert, sowie eine Abhebesicherung (6) mit einer zweiten sphärischen Lagerfläche (6.2), die an einer zentralen Säule (1.1) des Lagergehäuses befestigbar ist und das obere Lagergehäuse (5) vor einem Abheben sichert, wobei in den Kunststoffliner (4) wenigstens ein Verschleißsensor (11) integriert ist, der in einem Neuzustand des Kunststoffliners (4) einen vordefinierten Abstand (12) zur ersten sphärischen Lagerfläche (4.1) des Kunststoffliners (4) aufweist, **dadurch gekennzeichnet, dass** die Abhebesicherung (6) und/oder eine oder mehrere Befestigungsschrauben (7), mit denen die Abhebesicherung (6) auf der zentralen Säule (1.1) des unteren Lagergehäuses (1) befestigt sind, mit wenigstens einem Sensor (10) ausgestattet ist oder sind.

2. Sphärisches Gelenklager (20) nach Anspruch 1, **dadurch gekennzeichnet, dass** der Verschleißsensor (11) als voneinander isoliertes Paar von Drähten ausgebildet ist, die bei Kontakt mit einer elektrisch leitfähigen Oberfläche des oberen Lagergehäuses (5) einen elektrischen Kontakt bilden.

3. Sphärisches Gelenklager (20) nach Anspruch 1, **dadurch gekennzeichnet, dass** der Verschleißsensor (11) als Drahtschlaufe mit durchgehender elektrischer Leitung ausgebildet ist, wobei bei auftretendem Verschleiß des Kunststoffliners (4) die Drahtschlaufe mittels eines mechanisch durch das obere Lagergehäuse (5) angepressten Unterbrechungsmittel unterbrochen, insbesondere mittels einer scharfen Kante des Unterbrechungsmittels gekappt oder an einer Sollbruchstelle gebrochen, wird.

4. Sphärisches Gelenklager (20) nach Anspruch 2 oder 3, **dadurch gekennzeichnet, dass** die Drähte des Verschleißsensors (11) vertikal, horizontal, radial und/oder mit einem Knick an die erste sphärische Lagerfläche (4.1) des Kunststoffliners (4) herangeführt sind.

5. Sphärisches Gelenklager (20) nach einem der Ansprüche 1 bis 4, **dadurch gekennzeichnet, dass** mehrere Verschleißsensoren (11) in Umfangsrichtung des Kunststoffliners (4) verteilt angeordnet sind.

6. Sphärisches Gelenklager (20) nach einem der Ansprüche 1 bis 5, **dadurch gekennzeichnet, dass** der Sensor (10) als Schraubensensor, insbesondere mit piezoelektrischen Messelementen, als Drucksensor in Form einer Unterlegscheibe, als Dehnungsmessstreifen, als Verdrehsensor oder als Bruchsensor, insbesondere als unterbrechbarer Stromkreis, ausgestaltet ist.

7. Gelenkfahrzeug mit einem sphärischen Gelenklager (20) nach einem der Ansprüche 1 bis 6 sowie einer Steuereinheit, die mit dem wenigstens einen Verschleißsensor (11) und/oder mit dem wenigstens einem Sensor (10) an der Abhebesicherung (6) oder einer Schraube (7) der Abhebesicherung (6), verbunden ist.

8. Verfahren zum Betreiben eines Gelenkfahrzeugs nach Anspruch 7 mit einem sphärischen Gelenklager (20) nach einem der Ansprüche 1 bis 6, **dadurch gekennzeichnet, dass** mittels der Steuereinheit überwacht wird, ob ein Verschleißsensor (11) einen Verschleiß des Kunststoffliners (4) und/oder ein Sensor an der Abhebesicherung (6) oder an einer Schraube (7) der Abhebesicherung (6) eine Lockerung der Abhebesicherung (6) anzeigt.

9. Verfahren nach Anspruch 8, **dadurch gekennzeichnet, dass** die Steuereinheit im Falle einer durch ein Signal eines Verschleißsensors (11) oder eines Sensors an einer Schraube (7) der Abhebesicherung (6) angezeigten Beschädigung des Gelenklagers (20) eine Meldung über die Beschädigung des Gelenklagers (20) erzeugt und diese Meldung einem Fahrzeugführer anzeigt, zum späteren Auslesen speichert und/oder einem externen Computer, insbesondere eines Wartungssystems für das Gelenkfahrzeug, übermittelt.

## Claims

1. A spherical joint bearing (20) for an articulated vehicle, comprising a lower bearing housing (1) which can be connected to a first articulated vehicle section and which has a central vertical column (1.1), an annular plastic liner (4) which is arranged about the column (1.1) in the lower bearing housing (1) and which defines an upwardly open first spherical bearing surface (4.1), an annular spherical upper bearing housing (5) which can be connected to a second articulated vehicle section and which is slidingly mounted on the first spherical bearing surface (4.1), as well as an anti-lift device (6) having a second spherical bearing surface (6.2) which can be fastened to a central column (1.1) of the bearing housing and secures the upper bearing housing (5) against being lifted off, wherein at least one wear sensor (11) is integrated into the plastic liner (4), which, in a new condition of the plastic liner (4), is a predefined distance (12) from the first spherical bearing surface (4.1) of the plastic liner (4), **characterized in that** the anti-lift device (6) and/or one or more fastening screws (7), with which the anti-lift device (6) is fastened on the central column (1.1) of the lower bearing housing (1), is or are equipped with at least one sensor (10).

2. The spherical joint bearing (20) according to Claim 1, **characterized in that** the wear sensor (11) is configured as a pair of wires insulated from one another, which form an electrical contact on contact with an electrically conductive surface of the upper bearing housing (5).

3. The spherical joint bearing (20) according to Claim 1, **characterized in that** the wear sensor (11) is configured as a wire loop having a continuous electrical line, wherein when wear occurs to the plastic liner (4), the wire loop is interrupted by means of an interruption means which is pressed on mechanically by the upper bearing housing (5), in particular by being cut off by means of a sharp edge of the interruption means or by being broken at a predetermined breaking point.

4. The spherical joint bearing (20) according to Claim 2 or 3, **characterized in that** the wires of the wear sensor (11) are guided vertically, horizontally, radially and/or with a kink to the first spherical bearing surface (4.1) of the plastic liner (4).

5. The spherical joint bearing (20) according to any one of Claims 1 to 4, **characterized in that** multiple wear sensors (11) are arranged in a distributed manner in the circumferential direction of the plastic liner (4).

6. The spherical joint bearing (20) according to any one of Claims 1 to 5, **characterized in that** the sensor (10) is designed as a screw sensor, in particular with piezoelectric measuring elements, as a pressure sensor in the form of a washer, as a strain gauge, as a torsion sensor or as a fracture sensor, in particular as an interruptible circuit.

7. An articulated vehicle with a spherical joint bearing (20) according to any one of Claims 1 to 6 as well as a control unit which is connected to the at least one wear sensor (11) and/or to the at least one sensor (10) on the anti-lift device (6) or a screw (7) of the anti-lift device (6).

8. A method for operating an articulated vehicle according to Claim 7 with a spherical joint bearing (20) according to any one of Claims 1 to 6, **characterized in that** it is monitored by means of the control unit whether a wear sensor (11) displays wear of the plastic liner (4) and/or a sensor on the anti-lift device (6) or on a screw (7) of the anti-lift device (6) displays a loosening of the anti-lift device (6).

9. The method according to Claim 8, **characterized in that**, in the event of damage to the joint bearing (20) displayed by a signal of a wear sensor (11) or of a sensor on a screw (7) of the anti-lift device (6), the control unit generates a message regarding the damage to the joint bearing (20) and displays said message to a vehicle driver, stores it so that it can be read out later, and/or transmits it to an external computer, in particular a maintenance system for the articulated vehicle.

## Revendications

1. Palier sphérique articulé (20) pour un véhicule articulé, comprenant un boîtier inférieur de palier (1) apte à être relié à une première partie du véhicule articulé, ayant un pilier central (1.1), une garniture annulaire (4) en matière plastique agencée dans le boîtier inférieur de palier (1) autour du pilier (1.1), qui définit une première surface de palier sphérique (4.1) ouverte vers le haut, un boîtier supérieur de palier sphérique annulaire (5) apte à être relié à une deuxième partie du véhicule articulé, qui est monté de manière glissante sur la première surface de palier sphérique (4.1), ainsi qu'un dispositif de sécurité anti-soulèvement (6) comprenant une deuxième surface sphérique de palier (6.2), qui est apte à être fixée à un pilier central (1.1) du boîtier de palier et qui empêche le boîtier de palier supérieur (5) de se soulever, au moins un capteur d'usure (11) étant intégré dans la garniture (4) en matière plastique, lequel capteur présente, à l'état neuf de la garniture (4) en matière plastique, une distance prédéfinie (12) par rapport à la première surface de palier sphérique (4.1) de la garniture (4) en matière plastique, **caractérisé en ce que** le dispositif de sécurité anti-soulèvement (6) et/ou une ou plusieurs vis de fixation (7) avec lesquelles le dispositif de sécurité anti-soulèvement (6) est fixé au pilier central (1.1) du boîtier inférieur de palier (1), sont équipées d'au moins un capteur (10).

2. Palier sphérique articulé (20) selon la revendication 1, **caractérisé en ce que** le capteur d'usure (11) est conçu sous la forme d'une paire de fils électriques isolés l'un de l'autre, qui établissent un contact électrique lorsqu'ils entrent en contact avec une surface électriquement conductrice du boîtier de palier supérieur (5).

3. Palier sphérique articulé (20) selon la revendication 1, **caractérisé en ce que** le capteur d'usure (11) est conçu sous la forme d'une boucle de fil métallique présentant une conductivité électrique continue ; en cas d'usure de la garniture (4) en matière plastique, la boucle de fil métallique est interrompue au moyen d'un moyen d'interruption pressé mécaniquement par le boîtier de palier supérieur (5), en particulier est coupée au moyen d'une arête vive du moyen d'interruption ou est cassée à un point de rupture prédéterminé.

4. Palier sphérique articulé (20) selon la revendication 2 ou la revendication 3, **caractérisé en ce que** les fils du capteur d'usure (11) sont amenés verticalement, horizontalement, radialement et/ou avec un coude, vers la première surface de palier sphérique (4.1) de la garniture (4) en matière plastique.

5. Palier sphérique articulé (20) selon l'une des revendications 1 à 4, **caractérisé en ce que** plusieurs capteurs d'usure (11) sont répartis dans le sens circonférentiel de la garniture (4) en matière plastique.

6. Palier sphérique articulé (20) selon l'une des revendications 1 à 5, **caractérisé en ce que** le capteur (10) est conçu sous la forme d'un capteur à vis, en particulier avec des éléments de mesure piézoélectriques, sous la forme d'un capteur de pression en forme de rondelle, sous la forme d'une jauge de contrainte, sous la forme d'un capteur de torsion ou sous la forme d'un capteur de rupture, en particulier sous la forme d'un circuit électrique interruptible.

7. Véhicule articulé comprenant un palier sphérique articulé (20) selon l'une des revendications 1 à 6, ainsi qu'une unité de commande qui est reliée à au moins un capteur d'usure (11) et/ou à au moins un capteur (10) placé sur le dispositif de sécurité anti-soulèvement (6) ou sur une vis (7) du dispositif de sécurité anti-soulèvement (6).

8. Procédé pour faire fonctionner un véhicule articulé selon la revendication 7 comprenant un palier sphérique articulé (20) selon l'une des revendications 1 à 6, **caractérisé en ce que** l'unité de commande surveille si un capteur d'usure (11) indique une usure de la garniture (4) en matière plastique et/ou si un capteur situé sur le dispositif de sécurité anti-soulèvement (6) ou sur une vis (7) du dispositif de sécurité anti-soulèvement (6) indique un desserrage du dispositif de sécurité anti-soulèvement (6).

9. Procédé selon la revendication 8, **caractérisé en ce que** l'unité de commande, en cas de signal provenant d'un capteur d'usure (11) ou d'un capteur situé sur une vis (7) du dispositif de sécurité anti-soulèvement (6), génère un message concernant l'endommagement du palier articulé (20) et affiche ce message à un conducteur de véhicule, le stocke pour une lecture ultérieure et/ou le transmet à un ordinateur externe, en particulier à un système de maintenance pour le véhicule articulé.
